# FASCICULE DE BREVET EUROPEEN

(11) **EP 1 681 204 B1**
(45) Date de publication et mention de la délivrance du brevet: **09.03.2011**
(21) Numéro de dépôt: 06100312.5
(22) Date de dépôt: 12.01.2006
(51) Int. Cl.: B60R 5/00, B60R 7/04

(54) **Dispositif de portage intérieur pour véhicule automobile et véhicule correspondant**
Innenraumtragvorrichtung für Fahrzeuge und ein entsprechendes Fahrzeug
Carrying device for a motor vehicle interior and vehicle comprising such a device

(30) Priorité: 13.01.2005 FR 0500376
(43) Date de publication de la demande: 19.07.2006
(73) Titulaire: Advanced Comfort Systems France SAS - ACS France, 79300 Bressuire (FR)
(72) Inventeur: Fourel, Pascal, 35400 Saint Malo (FR)
(74) Mandataire: Bioret, Ludovic

(56) Documents cités:
- WO-A-2004/018259
- FR-A- 2 682 657
- US-A- 4 881 673
- US-A- 5 957 353
- PATENT ABSTRACTS OF JAPAN vol. 015, no. 350 (M-1154), 5 septembre 1991 (1991-09-05) -& JP 03 136940 A (SUZUKI MOTOR CORP; others: 01), 11 juin 1991 (1991-06-11)

## Description

### 1. Domaine de l'invention

Le domaine de l'invention est celui des équipements automobiles, et plus précisément de l'aménagement intérieur d'un véhicule automobile. Plus généralement, l'invention concerne également le transport et le stockage d'objets dans un véhicule.

### 2. Solutions de l'art antérieur

### 2.1 art antérieur

Les utilisateurs de véhicule automobile ont un besoin important d'aménagement intérieur pour leur véhicule, et particulièrement d'une meilleure exploitation de l'espace disponible dans l'habitacle du véhicule. En effet, les utilisateurs ont couramment le besoin de mettre et de maintenir des objets de grande taille dans leur véhicule.

Le problème du maintien d'un ou plusieurs objets à l'intérieur d'un coffre ou plus généralement d'un espace permettant le transport d'objet dans un véhicule est bien connu, en particulier dans les breaks, les véhicules utilitaires ou les monospaces. En effet, il est souhaitable de maintenir immobiles les objets stockés dans le coffre, pour éviter leur déplacement lorsque le véhicule circule, pour l'empêcher de cogner contre d'autres objets ou contre des éléments du véhicule, et donc de se détériorer. Pendant longtemps, l'utilisateur était contraint de prévoir des moyens pour caler les objets qu'il transportait. Il pouvait également utiliser des moyens de fixation tels que des cordes ou des tendeurs.

Le problème est encore plus crucial pour le transport d'objets longs, tels que des planches, des madriers, des tasseaux, des rouleaux de tissus, des planches à voile... Dans ce cas, en effet, la longueur du coffre du véhicule n'est souvent pas suffisante pour faire entrer ces objets, ce qui rend donc parfois nécessaire le démontage des sièges arrière des véhicules. De plus, ces objets, bien qu'occupant relativement peu de volume, couvrent une grande partie de la surface du coffre, ou du plancher du véhicule. Il est donc parfois difficile ou peu pratique de placer d'autres objets, comme des valises, en plus de ces objets longs.

Pour répondre à ce besoin, il a été envisagé d'installer au voisinage du pavillon des véhicules, à l'intérieur du véhicule, des barres de portage. Ces barres de portage permettent à l'utilisateur de ranger contre le pavillon de son véhicule les objets longs qu'il veut transporter sans avoir à démonter les sièges arrière de son véhicule, et en laissant libre la surface du coffre. Il est donc possible de rajouter facilement d'autres objets dans le véhicule.

Le document FR 2 682 657 décrit un tel dispositif mettant en oeuvre une barre de portage. Ce dispositif présente l'inconvénient de ne pas être réglable et d'empêcher le chargement d'objets hauts.

### 2.2 inconvénients de l'art antérieur

Un inconvénient de cette technique de l'art antérieur est que les objets longs transportés sur les barres de portage risquent de glisser des barres de portage. En particulier, en cas de freinage brutal du véhicule, ces objets peuvent glisser vers l'avant avec une force importante. Ils peuvent alors, par exemple, percuter le pare-brise avant du véhicule et le briser. Ils peuvent également frapper la tête du conducteur ou d'un passager et occasionner des blessures. Les objets transportés peuvent également être endommagés. Ces risques sont inacceptables pour les utilisateurs de tels véhicules.

Un autre inconvénient de cette technique de l'art antérieur est que les barres de portage, quand elles ne sont pas utilisées, occupent de la place dans l'habitacle du véhicule. Elles peuvent être gênantes pour les passagers du véhicule occupant les sièges arrière, surtout s'ils sont de grande taille. Elles peuvent également empêcher de mettre dans le coffre un objet haut, et donc de limiter la capacité de transport du véhicule.

### 3. Objectifs de l'invention

L'invention a notamment pour objectif de pallier ces inconvénients de l'art antérieur.

Plus précisément, un objectif de l'invention est de fournir une technique de portage permettant le transport d'objets longs dans un véhicule tout en assurant la sécurité du conducteur, des passagers, et des objets transportés.

Un autre objectif optionnel de l'invention est de mettre en oeuvre une telle technique de portage qui permette d'optimiser et de maximiser l'occupation du volume de l'habitacle du véhicule, notamment quand ces barres de portage ne sont pas utilisées.

L'invention a encore pour objectif de fournir de une telle technique qui soit facile à mettre en oeuvre et à utiliser, et dont la fabrication soit peu coûteuse.

Un autre objectif de l'invention est de fournir une telle technique qui puisse être mise en place dans un véhicule après la fabrication de celui-ci, à titre d'option ou d'équipement indépendant.

### 4. Caractéristiques essentielles de l'invention

Ces objectifs, ainsi que d'autres qui apparaîtront par la suite, sont atteints à l'aide d'un dispositif de portage pour véhicule automobile selon la revendication 1.

Ainsi, l'invention permet de transporter dans un véhicule des objets longs en associant les avantages des barres de portage, notamment leur simplicité d'utilisation, et une sécurité accrue, par un meilleur maintient des objets transportés.

Selon un mode de mise en oeuvre particulier, l'élément d'arrêt définit sensiblement un angle droit, entre une première portion sensiblement plane s'étendant sensiblement horizontalement, et une seconde portion sensiblement plane s'étendant sensiblement verticalement.

Selon un mode de réalisation préférentiel de l'invention, ledit élément d'arrêt est composé d'un treillis.

Selon un aspect préférentiel de l'invention, au moins une des barres de portage est mobile en coulissement le long de deux rails montés sur le pavillon ou au voisinage de ce dernier.

Ainsi, l'écartement entre deux barres de portage peut facilement s'adapter à la taille de l'objet qui est transporté.

Selon un aspect avantageux de l'invention, au moins une des barres de portage est réglable en hauteur, de façon à prendre au moins une première position de transport et une position de rangement.

Les barres de portage peuvent ainsi s'escamoter quand elles ne sont pas utilisées, et libèrent alors de la place dans l'habitacle du véhicule. Le réglage en hauteur peut s'effectuer par exemple par coulissement de deux pièces l'une par rapport à l'autre, ou à l'aide de plusieurs crans.

Selon un mode de réalisation préférentiel, cette barre de portage présente une forme générale en U, dont les extrémités sont solidaires d'un élément de liaison fixé au pavillon ou au voisinage de ce dernier, et articulées par rapport à cet élément de liaison.

Le déplacement et l'escamotage des barres de portage peut ainsi se faire particulièrement facilement.

Avantageusement, cette barre de portage peut prendre au moins une position intermédiaire, dans laquelle l'espace entre la barre de portage et le pavillon est réduit, par rapport à la première position de transport.

L'espace entre la barre de portage et le pavillon du véhicule peut ainsi être adapté en fonction de la taille de l'objet qui est transporté.

Selon un aspect avantageux de l'invention, lesdits moyens d'arrêt sont articulés et/ou repliables, en fonction de la position de la barre de portage à laquelle ils sont solidarisés.

Selon d'autres modes de réalisation, les moyens d'arrêt peuvent être souples (filets, toiles, ...) ou complètement rigides.

De façon avantageuse, le dispositif de portage comprend une structure solidarisable au véhicule, de forme générale en U, dont les branches forment des rails de support et/ou de guidage d'au moins une desdites barres de portage, et dont la base est solidaire de ladite seconde extrémité de l'élément d'arrêt.

Le dispositif de portage forme alors un ensemble qui peut être monté d'une seule pièce dans le véhicule automobile. Les rails peuvent également être indépendants.

L'invention concerne également un véhicule automobile comprenant un dispositif de portage tel que décrit ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un pavillon de véhicule automobile équipé d'un dispositif de portage selon l'invention ;
- la figure 2 présente le pavillon de la figure 1 sur lequel l'une des barres de portage se déplace en coulissement le long de rails de guidage ;
- la figure 3 présente le pavillon de la figure 1 sur lequel les barres de portage sont en position de rangement ;
- la figure 4 illustre différentes positions pouvant être prises par des barres de portage selon l'invention ;
- La figure 5 présente un pavillon de véhicule équipé d'un dispositif de portage selon l'invention et une charge portée par ce dispositif.

### 6. Description d'un mode de réalisation de l'invention

### 6.1 Rappel du principe de l'invention

L'invention propose donc d'associer à des barres de portage intérieures d'un véhicule automobile un élément d'arrêt empêchant la charge de glisser des barres, et de rendre les barres de portage réglable en hauteur, notamment pour pouvoir les ranger.

### 6.2 Les moyens d'arrêt

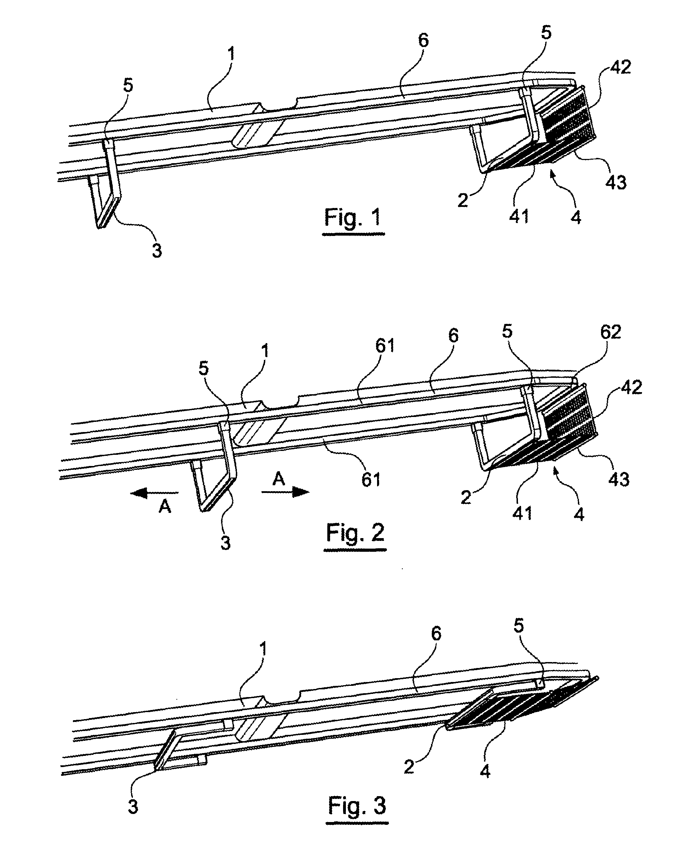

On présente, en relation avec la figure 1, un mode de réalisation préférentiel de l'invention. Un pavillon 1 d'un véhicule automobile est équipé, sur sa face intérieure, de deux barres de portage une à l'avant 2 et l'autre à l'arrière 3. Ces barres de portage peuvent avantageusement être formées de profils d'acier mis en forme, ou de profils d'aluminium.

Un moyen d'arrêt de la charge est prévu en avant de la barre de portage avant 2. Ce moyen d'arrêt est destiné à empêcher la charge portée par les barres de portage 2 et 3 de glisser hors de ces barres de portage. Ce moyen d'arrêt, ou panier, est ici constitué par une structure en treillis 4 liée d'une part à la barre de portage 2 et d'autre part à un élément solidaire du pavillon 1 du véhicule.

Cet élément 4 en treillis peut sans inconvénient être remplacé, par exemple, par un filet, une toile, un store pouvant ou non comporter un enrouleur, un ensemble de plaques, ou plus généralement par tout élément susceptible de retenir la charge portée par les barres de portage et l'empêcher de glisser vers l'avant.

L'élément 4 représenté sur la figure 1 est constitué de deux plaques de grillage métallique assemblées, la première plaque 41 étant sensiblement horizontale, parallèle au pavillon, et la seconde étant sensiblement verticale.

### 6.3 Le coulissement des barres

Dans le mode de réalisation qui est représenté sur les figures, les barres de portage 2 et 3 ont sensiblement une forme de U, ce qui leur permet d'être solidarisées au pavillon 1 ou à une structure 6 fixée au pavillon tout en étant suffisamment éloignées du pavillon pour permettre d'insérer les objet à transporter entre les barres de portage et le pavillon.

Dans d'autres modes de réalisation qui peuvent être mis en oeuvre, les barres de portage peuvent également être fixées aux parois verticales du véhicule, à proximité du pavillon.

Sur les figures 1 et 2, les barres 2 et 3 sont liées à la structure 6 par des éléments de liaison 5. Comme le montre la figure 2, les éléments de liaison 5 de la barre de portage arrière 3 lui permettent de coulisser le long de deux rails glissières 61, dans la direction indiquée par les flèches A. L'éloignement des deux barres de portage 2 et 3 peut donc être ajusté en fonction des besoins, et particulièrement en fonction de la taille des objets à transporter.

Des moyens de verrouillage du coulissement peuvent avantageusement être mis en oeuvre, par exemple dans les éléments de liaison 5 de la barre 3.

La barre de portage avant 2 peut également être coulissante, bien que ce ne soit pas le cas dans le mode de réalisation représenté. Dans ce cas, le moyen d'arrêt doit alors être adapté à ce déplacement. Il peut alors consister, par exemple, en un store à enrouleur, ou en un panier qui peut se déplacer en même temps que la barre de portage. Il peut également être solidaire de la structure du véhicule.

Bien entendu, ce déplacement peut également se faire si les barres de portage sont fixées aux parois horizontales du véhicule. Ce déplacement peut se faire, dans ce cas, le long de rails disposés sur ces parois.

Dans le cas représenté par les figures, la barre de portage avant ne peut pas coulisser. L'élément de liaison 5 peut alors être fixé très facilement par vissage sur les rails glissières 61.

### 6.4 La position de rangement

Comme le représente la figure 3, la hauteur des barres de portage, ou leur distance par rapport au pavillon du véhicule, peut être modifiée, notamment pour ranger les barres de portage quand elles ne sont pas utilisées.

De façon avantageuse, dans le mode de réalisation représenté, les éléments de liaison 5 incluent des articulations qui permettent de relever les barres de portage 2, 3 et de les plaquer sensiblement contre le pavillon 1 du véhicule. Des moyens de verrouillage adaptés, par exemple au niveau de l'articulation des éléments de liaison 5, permettent de maintenir les barres de portage 2 et 3 dans la position de rangement telle que représentée par la figure 3.

D'autres méthodes de réglage en hauteur des barres de portage peuvent également être envisagées. Les barres peuvent par exemple coulisser dans de petits rails verticaux. Dans ce cas, d'autres moyens de verrouillage peuvent également être adaptés.

Si les barres de portage sont réglables en hauteur, les moyens d'arrêt 4 doivent alors accompagner le déplacement de la barre de portage à laquelle ils sont associés. Dans le mode de réalisation représenté par les figures, les deux plaques de grillage métallique 41 et 42 sont assemblées l'une à l'autre par une charnière 43 pour former l'élément d'arrêt 4. La plaque 41 étant sensiblement parallèle au pavillon, et la plaque 42 étant sensiblement parallèle à la barre de portage 2, l'élément d'arrêt 4 peut se plier en même temps que la barre de portage 2, en formant avec elle un parallélogramme.

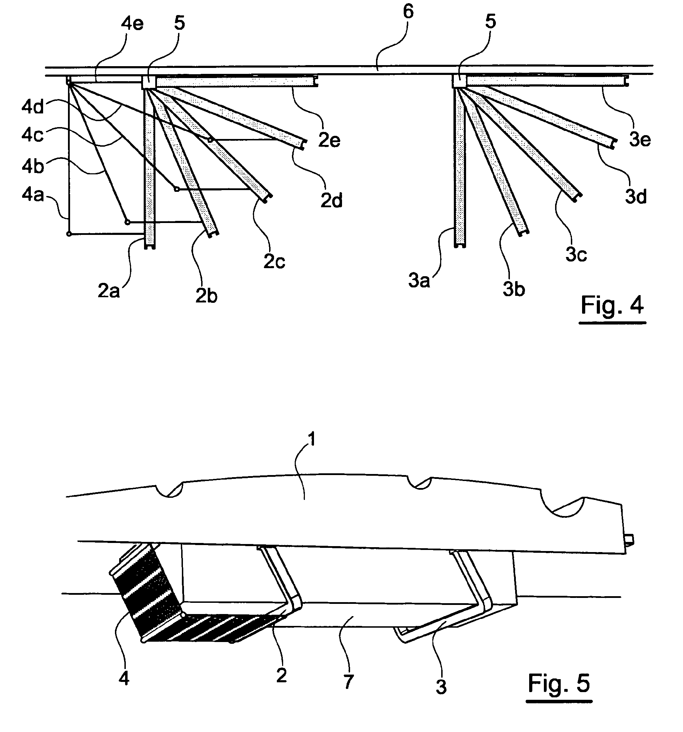

Ce mouvement est représenté sur la figure 4 où la barre de portage 2 est en position déployée 2a, ou position de transport, en position de rangement 2e, ou dans des positions intermédiaires 2b, 2c et 2d.

### 6.5 Les positions intermédiaires

Les barres de portage peuvent également être verrouillées dans un réglage de hauteur intermédiaire. On peut ainsi voir sur la figure 4 des exemples de positions intermédiaire pour les barres de portage avant 2b, 2c et 2d, et pour les barres arrière 3b, 3c et 3d. Un réglage intermédiaire de la hauteur des barres de portage permet d'optimiser la position de celles-ci en fonction de la taille de l'objet que l'on veut transporter.

La figure 5 représente ainsi une charge 7 transportée sur des barres de portage de ce type. Le réglage de la hauteur des barres 2 et 3 permet de transporter la charge 7 tout en conservant le plus d'espace possible disponible dans l'habitacle du véhicule.

Dans chacune des positions, le moyen d'arrêt 4a, 4b, 4c, 4d ou 4e s'adapte à la position de la barre de portage à laquelle il est associé.

Dans le cas d'un réglage de la hauteur des barres de portage par une autre méthode que celle représentée par les figures, il est bien entendu également possible de verrouiller cette hauteur dans une ou plusieurs positions intermédiaires, par exemple avec un dispositif à encoches ou à crans de blocage.

### 6.6 Autres aspects

Bien que le mode de réalisation présenté par les figures mette en oeuvre deux barres de portage, il est bien entendu possible d'en prévoir un plus grand nombre dans le même dispositif de portage. Il est également possible d'en prévoir une seule. Des moyens d'arrêt de charge solides et indépendants de la barre de portage, par exemple sous la forme d'un panier, peuvent alors maintenir l'extrémité de la charge qui n'est pas portée par la barre de portage.

Dans un autre mode de réalisation possible, les barres de portage peuvent être reliées par des barres longitudinales, ou par un grillage, pour former une galerie intérieure.

De façon avantageuse, la structure 6 du dispositif de portage a une forme de U. Les branches de ce U sont formées par les rails 61, auxquels sont solidarisés les barres de portage. La base 62 de ce U peut, avantageusement, être solidarisé à l'extrémité de l'élément d'arrêt. De cette façon, tout le dispositif de portage forme un ensemble qui peut être monté d'une seule pièce au pavillon du véhicule.Les rails 61 peuvent, par exemple, être assemblées par vissage au pavillon du véhicule, et notamment aux arches de ce pavillon.

Le mode de réalisation décrit ci-dessus ne met en oeuvre qu'un moyen d'arrêt de la charge, lié à la barre de portage avant. Il est également possible d'envisager, sans sortir du cadre de l'invention, d'associer un deuxième moyen d'arrêt à la barre de portage arrière. Ce deuxième moyen d'arrêt pourra éventuellement être amovible, pour permettre le chargement plus facile des barres de portage.

Les barres de portage selon l'invention peuvent également remplir des fonctions de portique. Il est ainsi possible d'y suspendre différents objets, tels que des cintres, des sacs, ou tout autre objet. Les barres de portage peuvent être équipées de moyens (ouvertures et/ou crochets) pour faciliter ces fonctions.

Les rails de guidage ne sont pas forcément parallèles. Dans ce cas, les barres (au moins celles qui sont mobiles) sont de longueur variable, par exemple à l'aide d'éléments coulissants l'un par rapport à l'autre.

## Revendications

1. Dispositif de portage pour véhicule automobile, comprenant au moins une barre de portage (2, 3) montée à l'intérieur dudit véhicule, au voisinage du pavillon (1),
**caractérisé en ce qu'**il comprend des moyens d'arrêt permettant d'empêcher un déplacement d'un objet (7) porté par ladite ou lesdites barre de portage (2, 3), sensiblement perpendiculairement à ladite ou auxdites barre de portage (2, 3), au-delà desdits moyens d'arrêt,
lesdits moyens d'arrêt comprenant un élément d'arrêt (4) pliable dont une première extrémité est solidaire de ladite ou d'une desdites barre de portage (2), et une seconde extrémité est solidaire de la structure dudit véhicule ou d'un élément lié à ladite structure.

2. Dispositif de portage selon la revendication 1, **caractérisé en ce que** ledit élément d'arrêt (4) définit sensiblement un angle droit, entre une première portion (41) sensiblement plane s'étendant sensiblement horizontalement, et une seconde portion (42) sensiblement plane s'étendant sensiblement verticalement.

3. Dispositif de portage selon l'une quelconque des revendications 1 et 2, **caractérisé en ce que** ledit élément d'arrêt (4) est composé d'un treillis.

4. Dispositif de portage selon l'une quelconque des revendications 1 à 3, **caractérisé en ce que** ladite ou au moins une desdites barres de portage (2, 3) est mobile en coulissement le long de deux rails montés sur ledit pavillon ou au voisinage de ce dernier.

5. Dispositif de portage selon l'une quelconque des revendications 1 à 4, **caractérisé en ce que** ladite ou au moins une desdites barres de portage (2, 3) est réglable en hauteur, de façon à prendre au moins une première position de transport et une position de rangement.

6. Dispositif de portage selon la revendication 5, **caractérisé en ce que** ladite ou au moins une desdites barre de portage (2, 3) présente une forme générale en U, dont les extrémités sont solidaires d'un élément de liaison (5) fixé au pavillon (1) ou au voisinage de ce dernier, et articulées par rapport à cet élément de liaison.

7. Dispositif de portage selon l'une quelconque des revendications 5 et 6, **caractérisé en ce que** ladite ou au moins une desdites barres de portage (2, 3) peut prendre au moins une position intermédiaire, dans laquelle l'espace entre ladite ou lesdites barres de portage (2, 3) et le pavillon (1) est réduit, par rapport à ladite première position de transport

8. Dispositif de portage selon la revendication 1 et l'une quelconque des revendications S à 7, **caractérisé en ce que** lesdits moyens d'arrêt sont articulés, et/ou repliables, en fonction de la position de la barre de portage (2) à laquelle ils sont solidarisés.

9. Dispositif de portage selon l'une quelconque des revendications 1 à 8, **caractérisé en ce qu'**il comprend une structure (6) solidarisable audit véhicule, de forme générale en U, dont les branches forment des rails (61) de support et/ou de guidage de ladite ou d'au moins une desdites barres de portage (2, 3), et dont la base (62) est solidaire de ladite seconde extrémité de l'élément d'arrêt (4).

10. Véhicule automobile comprenant un dispositif de portage comprenant au moins une barre de portage (2, 3) montée à l'intérieur dudit véhicule, au voisinage du pavillon (1),
**caractérisé en ce qu'**il comprend des moyens d'arrêt (4) permettant d'empêcher un déplacement d'un objet (7) porté par ladites ou lesdites barre, sensiblement perpendiculairement à ladite ou auxdites barre, au-delà desdits moyens d'arrêt, lesdits moyens d'arrêt comprenant un élément d'arrêt (4) pliable dont une première extrémite est solidaire de ladite ou d'une desdites barres de portage (2), et une seconde extrémité est solidaire de la structure dudit véhicule ou d'un élément lié à ladite structure.

## Claims

1. Carrying device for a motor vehicle, comprising at least one carrying bar (2, 3) which is mounted inside the vehicle, in the region of the roof (1),
**characterised in that** it comprises stop means which prevent an object (7) carried by the carrying bar(s) (2, 3) from being moved substantially perpendicularly relative to the carrying bar(s) (2, 3), beyond the stop means,
the stop means comprising a foldable stop element (4), a first end of which is fixedly joined to the or one of the carrying bar(s) (2), and a second end of which is fixedly joined to the structure of the vehicle or an element which is connected to the structure.

2. Carrying device according to claim 1, **characterised in that** the stop element (4) substantially defines a right angle, between a first substantially planar portion (41) which extends substantially horizontally and a second substantially planar portion (42) which extends substantially vertically.

3. Carrying device according to either claim 1 or claim 2, **characterised in that** the stop element (4) is composed of a trellis.

4. Carrying device according to any one of claims 1 to 3, **characterised in that** the or at least one of the carrying bars (2, 3) is slidingly movable along two rails which are mounted on the roof or in the region thereof.

5. Carrying device according to any one of claims 1 to 4, **characterised in that** the or at least one of the carrying bar(s) (2, 3) can be adjusted in terms of height so as to take up at least a first transport position and a storage position.

6. Carrying device according to claim 5, **characterised in that** the or at least one of the carrying bar(s) (2, 3) is generally in the form of a "U" whose ends are fixedly joined to a connection element (5), which is fixed to the roof (1) or in the region thereof, and are articulated relative to this connection element.

7. Carrying device according to either claim 5 or claim 6, **characterised in that** the or at least one of the carrying bars (2, 3) can take up at least one intermediate position, in which the space between the carrying bar(s) (2, 3) and the roof (1) is reduced, in relation to the first transport position.

8. Carrying device according to claim 1 and any one of claims 5 to 7, **characterised in that** the stop means are articulated and/or foldable, in accordance with the position of the carrying bar (2) to which they are fixedly joined.

9. Carrying device according to any one of claims 1 to 8, **characterised in that** it comprises a structure (6) which can be fixedly joined to the vehicle and which is generally in the shape of a "U" whose branches form rails (61) for supporting and/or guiding the or at least one of the carrying bar(s) (2, 3) and whose base (62) is fixedly joined to the second end of the stop element (4).

10. Motor vehicle comprising a carrying device comprising at least one carrying bar (2, 3) which is mounted inside the vehicle, in the region of the roof (1),
**characterised in that** it comprises stop means (4) which prevent an object (7) carried by the bar(s) from being moved substantially perpendicularly relative to the bar(s), beyond the stop means,
the stop means comprising a foldable stop element (4), a first end of which is fixedly joined to the or one of the carrying bar(s) (2), and a second end is fixedly joined to the structure of the vehicle or an element which is connected to the structure.

## Patentansprüche

1. Trägervorrichtung für ein Kraftfahrzeug, mit mindestens einer Trägerstange (2, 3), die im Inneren dieses Fahrzeugs benachbart zum Dach (1) montiert ist, **dadurch gekennzeichnet, dass** sie Arretierungsmittel aufweist, die es erlauben, eine Verschiebung eines Gegenstands (7), der von dieser oder diesen Trägerstange(n) (2, 3) getragen wird, im Wesentlichen rechtwinklig zur oder zu den Trägerstangen (2, 3) über diese Arretierungsmittel hinaus zu verhindern, wobei diese Arretierungsmittel ein faltbares Arretierungselement (4) aufweisen, dessen erstes Ende mit der oder einer der Trägerstange(n) (2) fest verbunden ist, und dessen zweites Ende mit der Struktur des Fahrzeugs oder mit einem mit dieser Struktur verbundenen Element fest verbunden ist.

2. Trägervorrichtung nach Anspruch 1, **dadurch gekennzeichnet, dass** das Arretierungselement (4) zwischen einem im Wesentlichen planen ersten Abschnitt (41), der im Wesentlichen horizontal verläuft, und einem im Wesentlichen planen zweiten Abschnitt (42), der im Wesentlichen vertikal verläuft, einen im Wesentlichen rechten Winkel definiert.

3. Trägervorrichtung nach einem der Ansprüche 1 und 2, **dadurch gekennzeichnet, dass** das Arretierungselement (4) aus einem Gitter besteht.

4. Trägervorrichtung nach einem der Ansprüche 1 bis 3, **dadurch gekennzeichnet, dass** die oder mindestens eine der Trägerstange(n) (2, 3) durch Verschiebung an zwei Schienen entlang, die am Dach oder benachbart dazu montiert sind, beweglich ist.

5. Trägervorrichtung nach einem der Ansprüche 1 bis 4, **dadurch gekennzeichnet, dass** die oder mindestens eine der Trägerstange(n) (2, 3) höhenverstellbar ist, um mindestens eine erste Transportposition und eine eingeklappte Position einzunehmen.

6. Trägervorrichtung nach Anspruch 5, **dadurch gekennzeichnet, dass** die oder mindestens eine der Trägerstange(n) (2, 3) allgemein die Form eines U aufweist, dessen Enden mit einem Verbindungselement (5) fest verbunden ist, das am Dach (1) oder benachbart dazu befestigt ist, und an dieses Verbindungselement angelenkt sind.

7. Trägervorrichtung nach einem der Ansprüche 5 und 6, **dadurch gekennzeichnet, dass** die oder mindestens eine der Trägerstange(n) (2, 3) mindestens eine Zwischenposition einnehmen kann, in welcher der Raum zwischen den Trägerstangen (2, 3) und dem Dach (1) im Vergleich zur ersten Transportposition reduziert ist.

8. Trägervorrichtung nach Anspruch 1 und einem der Ansprüche 5 bis 7, **dadurch gekennzeichnet, dass** die Arretierungsmittel in Abhängigkeit von der Position der Trägerstange (2), mit welcher sie fest verbunden sind, angelenkt und/oder faltbar sind.

9. Trägervorrichtung nach einem der Ansprüche 1 bis 8, **dadurch gekennzeichnet, dass** sie eine Struktur (6) aufweist, die mit dem Fahrzeug fest verbindbar ist, allgemein in Form eines U, dessen Zweige Trag- und/oder Führungsschienen (61) der oder mindestens einer der Trägerstange(n) (2, 3) formen und dessen Basis (62) mit dem zweiten Ende des Arretierungselements (4) fest verbunden ist.

10. Kraftfahrzeug mit einer Trägervorrichtung, mit mindestens einer Trägerstange (2, 3), die im Inneren dieses Fahrzeugs benachbart zum Dach (1) montiert ist, **dadurch gekennzeichnet, dass** sie Arretierungsmittel (4) aufweist, die es erlauben, eine Verschiebung eines Gegenstands (7), der von dieser oder diesen Trägerstange(n) (2, 3) getragen wird, im Wesentlichen rechtwinklig zur oder zu den Trägerstangen (2, 3) über diese Arretierungsmittel hinaus zu verhindern,
wobei diese Arretierungsmittel ein faltbares Arretierungselement (4) aufweisen, dessen erstes Ende mit der oder einer der Trägerstange(n) (2) fest verbunden ist, und dessen zweites Ende mit der Struktur des Fahrzeugs oder mit einem mit dieser Struktur verbundenen Element fest verbunden ist.
